# EUROPÄISCHE PATENTSCHRIFT

(11) **EP 3 501 773 B1**
(45) Veröffentlichungstag und Bekanntmachung des Hinweises auf die Patenterteilung: **21.10.2020**
(21) Anmeldenummer: 18214297.6
(22) Anmeldetag: 20.12.2018
(51) Int. Cl.: B29B 9/06, B26D 7/26, B26D 1/28

(54) **GRANULIERVORRICHTUNG UND VERFAHREN ZUR GRANULIERUNG VON MATERIALSTRÄNGEN**
GRANULATING DEVICE AND METHOD FOR GRANULATING STRANDS OF MATERIAL
DISPOSITIF DE GRANULATION ET PROCÉDÉ DE GRANULATION DE BOUDINS DE MATIÈRE

(30) Priorität: 22.12.2017 DE 102017223708
(43) Veröffentlichungstag der Anmeldung: 26.06.2019
(73) Patentinhaber: Coperion GmbH, 70469 Stuttgart (DE)
(72) Erfinder: Vlasova, Tatiana, 71701 Schwieberdingen (DE); Hölzel, Maria, 71735 Eberdingen (DE); Schweikle, Jürgen Alexander, 74172 Neckarsulm (DE); Rudi, Oleg, 74321 Bietigheim-Bissingen (DE); Cansino, Dennis, 71706 Markgröningen (DE)
(74) Vertreter: Rau, Schneck & Hübner Patentanwälte Rechtsanwälte PartGmbB

(56) Entgegenhaltungen:
- DE-A1- 1 454 841
- DE-A1- 10 322 610
- DE-A1-102005 017 844
- DE-A1-102013 008 566
- US-A1- 2005 035 483

## Beschreibung

Die Erfindung betrifft eine Granuliervorrichtung und ein darauf bezogenes Verfahren zur Granulierung von Materialsträngen.

Aus der DE 103 22 610 A1 ist eine Granuliervorrichtung mit einer Lochplatte und einem Messerkopf bekannt. Der Messerkopf weist mehrere Granuliermesser auf, die an einer stromabwärtigen Seite gegen die Lochplatte anliegen und mittels eines Antriebsmotors drehangetrieben werden, sodass durch die Lochplatte tretende Materialstränge zu Granulat geschnitten werden. Zur Erzielung einer hohen Schnittqualität muss die Position der Granuliermesser zu der Lochplatte exakt eingestellt werden. Trotz einer exakten Einstellung kommt es im Betrieb der Granuliervorrichtung zu einem schlechten Schnittbild, das sich regelmäßig in der Ausbildung von sogenannten Fähnchen zeigt, die entweder am Granulat anhaften oder sich vom Granulat ablösen und einen unerwünschten Feinanteil im Granulat bilden. Der Feinanteil führt einerseits zu einem Materialverlust und andererseits zu Problemen bei der nachfolgenden Förderung des Granulats.

Aus der DE 1 454 841 A1 ist ein Granulator bekannt, der eine Lochplatte und einen Schneidmesserhalter umfasst. An dem Schneidmesserhalter sind vier Schneidmesser in einem Winkel von 90° zueinander angeordnet. Der Schneidmesserhalter ist mittels einer elastischen Scheibe an einer Nabe befestigt, die mittels einer Welle drehangetrieben wird.

Der Erfindung liegt die Aufgabe zugrunde, eine Granuliervorrichtung zu schaffen, die auf einfache und dauerhafte Weise eine Granulierung von Materialsträngen mit einer hohen Schnittqualität gewährleistet.

Diese Aufgabe wird durch eine Granuliervorrichtung mit den Merkmalen des Anspruchs 1 gelöst.

Erfindungsgemäß wurde erkannt, dass eine schlechte Schnittqualität nicht nur durch das dynamische Verhalten des Messerkopfes, also durch dessen Rotation im Betrieb bedingt ist, sondern überwiegend durch thermische Verformungen aufgrund einer Erwärmung

des Messerkopfes beim Schneiden. Bekannte Messerköpfe weisen einen Messerträger mit mehreren Messerarmen auf, so dass durch den Schneidvorgang ein Temperaturgradient in Umfangsrichtung entlang des jeweiligen Messerarms und des daran befestigten Granuliermessers mit einem Temperaturmaximum an einer Schneidkante des Granuliermessers und einem Temperaturminimum an einer der Schneidkante gegenüberliegenden Kante des jeweiligen Messerarms entsteht. Der Temperaturgradient führt beim Schneiden zu einer unerwünschten Verformung des jeweiligen Messerarms und des zugehörigen Granuliermessers, sodass sich das Granuliermesser an einem äußeren Schneidradius von einer Lochplatte abhebt und sich gleichzeitig der zugehörige Messerarm in sich selbst verdreht. Eine Einstellung der Position des jeweiligen Granuliermessers vor Beginn der Granulierung derart, dass dieser unerwünschte Effekt im Betrieb ausgeglichen wird, ist nicht möglich.

Es wurde jedoch erfindungsgemäß erkannt, dass die beschriebenen thermischen Verformungen erheblich reduziert und/oder kompensiert werden können, wenn der Messerträger aus einem Messerträger-Material hergestellt ist bzw. besteht, das bei 20 °C eine Wärmeleitfähigkeit λ₁ ≥ 150 W/m/K und einen Wärmeausdehnungskoeffizienten α₁ ≥ 16 · 10⁻⁶ 1/K hat. Durch die Wärmeleitfähigkeit λ₁ wird die aufgrund des Schneidens erzeugte Wärme vergleichsweise besser abgeleitet und über den Messerträger verteilt, sodass ein Temperaturgradient wesentlich reduziert wird. In Verbindung mit dem vergleichsweise hohen Wärmeausdehnungskoeffizienten α₁ wird eine gleichmäßigere Wärmeausdehnung erzielt, sodass für die Schnittqualität nachteilige thermische Verformungen erheblich reduziert werden. Insbesondere passt sich der Messerträger aufgrund des vergleichsweise hohen Wärmeausdehnungskoeffizienten α₁ besser an die vergleichsweise heißeren Granuliermesser an.

Der Messerträger weist mindestens zwei Messerarme, vorzugsweise mindestens drei Messerarme auf, die insbesondere rotationssymmetrisch um die Drehachse des Messerträgers angeordnet sind. Die mindestens zwei Messerarme erstrecken sich ausgehend von einem zentralen Lagerabschnitt, der die Ausbildung der Drehachse ermöglicht, in einer radialen Richtung. Der Lagerabschnitt ist beispielsweise als Nabe ausgebildet. Durch die mindestens zwei Messerarme und das jeweilige daran befestigte Granuliermesser werden die Materialstränge bei einer Umdrehung des Messerträgers entsprechend der Granuliermesser-Anzahl geschnitten. Hierdurch wird eine hohe Schnittleistung erzielt. Der jeweilige Messerarm und das zugehörige Granuliermesser sind beispielsweise über mehrere Schrauben miteinander verbunden. Beispielsweise ist das jeweilige Granuliermesser an dem zugehörigen Messerarm geklemmt.

Die Granuliervorrichtung eignet sich insbesondere zur Granulierung von Kunststoff-Materialsträngen, die aus einer Kunststoffschmelze erzeugt werden. Die Drehachse des Messerkopfes ist konzentrisch oder exzentrisch zu der Lochplatte angeordnet. Die Antriebseinrichtung ist vorzugsweise derart ausgebildet, dass der Messerkopf mit einer Drehzahl von mindestens 1.200 min⁻¹, insbesondere von mindestens 1.400 min⁻¹, und insbesondere von mindestens 1.600 min⁻¹ um die Drehachse drehantreibbar ist. Die Granuliervorrichtung ist insbesondere als Heißgranuliervorrichtung ausgebildet, bei der der Schnitt von Granulat trocken erfolgt.

Der Messerkopf mit dem Messerträger eignet sich insbesondere zur Granulierung von Materialsträngen aus einer Kunststoffschmelze und/oder zur exzentrischen Granulierung. Beispielsweise ist mit dem Messerkopf die Schnittqualität bei einem Heißabschlag von PVC-Materialsträngen mittels einer exzentrischen Granulierung erheblich verbesserbar.

Je höher die Wärmeleitfähigkeit λ₁ des Messerträger-Materials ist, desto gleichmäßiger ist eine Temperaturverteilung des gesamten Messerkopfes und desto geringer sind die thermischen Verformungen. Je höher der Wärmeausdehnungskoeffizient α₁ ist, desto besser wird die thermische Ausdehnung des Messerkopfes ausgeglichen und desto höher ist die Schnittqualität. Für die Wärmeleitfähigkeit λ₁ gilt vorzugsweise: λ₁ ≤ 900 W/m/K, insbesondere λ₁ ≤ 700 W/m/K und insbesondere λ₁ ≤ 500 W/m/K. Für den Wärmeausdehnungskoeffizienten α₁ gilt vorzugsweise: α₁ ≤ 40 · 10⁻⁶ 1/K, insbesondere α₁ ≤ 35 · 10⁻⁶ 1/K, und insbesondere α₁ ≤ 30 ·10⁻⁶ 1/K.

Eine Granuliervorrichtung nach Anspruch 2 gewährleistet eine hohe Schnittqualität. Je höher die Wärmeleitfähigkeit λ₁ ist, desto geringer ist der Temperaturgradient des Messerkopfes und desto höher ist die Schnittqualität.

Eine Granuliervorrichtung nach Anspruch 3 gewährleistet eine hohe Schnittqualität. Je höher der Wärmeausdehnungskoeffizient α₁ ist, desto geringer sind die thermischen Verformungen und desto höher ist die Schnittqualität.

Eine Granuliervorrichtung nach Anspruch 4 gewährleistet eine hohe Schnittqualität bei hohen Drehzahlen des Messerkopfes. Aufgrund der geringen Dichte ρ₁ ist der Messerkopf vergleichsweise leicht und hat kritische Eigenfrequenzen, die bei Drehzahlen bis zu 1.800 min⁻¹ nicht angeregt werden. Darüber hinaus verlagert sich der Schwerpunkt des Messerträgers bzw. des jeweiligen Messerarms im Betrieb zur eingebauten Lochplatte, wodurch sich der Messerträger bzw. der jeweilige Messerarm unter Einwirkung der Fliehkraft zu der Lochplatte verformt. Hierdurch wird auch bei hohen Drehzahlen eine gute Plananlage des jeweiligen Granuliermessers an der Lochplatte erzielt. Die Dichte ρ₁ ist insbesondere für eine Temperatur von 20 °C angegeben. Je geringer die Dichte ρ₁ ist, desto höher ist die Schnittqualität. Für die Dichte ρ₁ gilt vorzugsweise: ρ₁ ≥ 0,5 g/cm³, insbesondere ρ₁ ≥ 1,0 g/cm³, und insbesondere ρ₁ ≥ 1,5 g/cm³.

Eine Granuliervorrichtung nach Anspruch 5 gewährleistet eine hohe Schnittqualität. Vorzugsweise ist das Messerträger-Material eine Legierung aus mindestens zwei der Materialien Aluminium, Kupfer, Magnesium und Beryllium. Vorzugsweise ist das Messerträger-Material eine Aluminium-Kupfer-Legierung, eine Magnesium-Aluminium-Legierung oder eine Kupfer-Beryllium-Legierung. Die Legierungen können jeweils weitere Legierungsbestandteile aufweisen.

Eine Granuliervorrichtung nach Anspruch 6 gewährleistet in einfacher Weise eine hohe Schnittqualität. Vorzugsweise ist das Messerträger-Material eine Aluminium-Kupfer-Legierung. Beispielsweise ist das Messerträger-Material AlCu4MgSi gemäß dem Werkstoffdatenblatt EN AW-2017A (DIN EN 573-3). Die Legierung umfasst vorzugsweise mindestens 85 Gew.-%, und insbesondere mindestens 90 Gew.-% Aluminium, Magnesium oder Kupfer.

Eine Granuliervorrichtung nach Anspruch 7 gewährleistet in einfacher Weise eine hohe Schnittqualität in Verbindung mit einer hohen Schnittleistung.

Eine Granuliervorrichtung nach Anspruch 8 gewährleistet auf dauerhafte Weise eine hohe Schnittqualität. Dadurch, dass das jeweilige Granuliermesser aus einem Messer-Material mit einer hohen Wärmeleitfähigkeit λ₂ besteht, werden die jeweiligen Temperaturgradienten und damit die thermischen Verformungen reduziert und eine verbesserte Plananlage des jeweiligen Granuliermessers an der Lochplatte erzielt. Insbesondere wird aufgrund der vergleichsweise hohen Wärmeleitfähigkeit λ₂ ein geringer Temperaturgradient zum Messerträger bzw. dem jeweils zugehörigen Messerarm erzielt, wodurch die Plananlage verbessert wird. Je höher die Wärmeleitfähigkeit λ₂ ist, desto geringer sind die thermischen Verformungen und desto höher ist die Schnittqualität. Für die Wärmeleitfähigkeit λ₂ gilt vorzugsweise: λ₂ ≤ 200 W/m/K, insbesondere λ₂ ≤ 160 W/m/K, und insbesondere λ₂ ≤ 120 W/m/K.

Eine Granuliervorrichtung nach Anspruch 9 gewährleistet auf dauerhafte Weise eine hohe Schnittqualität. Dadurch, dass die mindestens zwei Granuliermesser, insbesondere jedes Granuliermesser, aus einem Messer-Material mit einem geringen Wärmeausdehnungskoeffizienten α₂ bestehen, werden thermische Verformungen reduziert und die Plananlage des jeweiligen Granuliermessers an der Lochplatte verbessert. Insbesondere dehnt sich das jeweilige Granuliermesser aufgrund des vergleichsweise geringen Wärmeausdehnungskoeffizienten α₂ bei hohen Temperaturen im Betrieb nicht wesentlich stärker als der Messerkopf bzw. der zugehörige Messerarm aus. Für den Wärmeausdehnungskoeffizienten α₂ gilt vorzugsweise: α₂ ≥ 1,0 · 10⁻⁶ 1/K, insbesondere α₂ ≥ 2,0 · 10⁻⁶ 1/K, und insbesondere α₂ ≥ 3,0 · 10⁻⁶ 1/K. Das Messer-Material ist vorzugsweise ein Hartmetall, beispielsweise ein Hartmetall der Sorte CTS24D (ISO-Code K30 - K40 nach DIN ISO 513), oder ein keramisches Material, beispielsweise auf Basis von Siliziumnitrid oder Aluminiumoxid.

Eine Granuliervorrichtung nach Anspruch 10 gewährleistet auf dauerhafte Weise eine hohe Schnittqualität. Für die Dichte ρ₂ gilt vorzugsweise: ρ₂ ≤ 30 g/cm³, insbesondere ρ₂ ≤ 25 g/cm³, und insbesondere ρ₂ ≤ 20 g/cm³. Je höher die Dichte ρ₂ ist, desto mehr verlagert sich der Schwerpunkt des Messerträgers bzw. des jeweiligen Messerarms zu der eingebauten Lochplatte hin, wodurch sich der Messerträger bzw. der jeweilige Messerarm unter Einwirkung der Fliehkraft zu der Lochplatte verformt. Hierdurch wird auch bei hohen Drehzahlen eine gute Plananlage des jeweiligen Granuliermessers an der Lochplatte erzielt. Dadurch verbessert sich die Schnittqualität. Die Dichte ρ₂ ist insbesondere für eine Temperatur von 20 °C angegeben.

Der Erfindung liegt ferner die Aufgabe zugrunde, ein Verfahren zu schaffen, das auf einfache und dauerhafte Weise eine Granulierung von Materialsträngen mit einer hohen Schnittqualität ermöglicht.

Diese Aufgabe wird durch ein Verfahren mit den Merkmalen des Anspruchs 11 gelöst.

Die Vorteile des erfindungsgemäßen Verfahrens entsprechen den bereits beschriebenen Vorteilen der erfindungsgemäßen Granuliervorrichtung. Die Materialschmelze ist vorzugsweise eine Kunststoffschmelze, beispielsweise eine Polyvinylchloridschmelze (PVC-Schmelze). Das Drehantreiben des Messerkopfes erfolgt vorzugsweise mit einer Drehzahl von mindestens 1.200 min⁻¹, insbesondere von mindestens 1.400 min⁻¹, und insbesondere von mindestens 1.600 min⁻¹. Die Drehzahl beträgt vorzugsweise höchstens 2.400 min⁻¹.

Weitere Merkmale, Vorteile und Einzelheiten der Erfindung ergeben sich aus der nachfolgenden Beschreibung mehrerer Ausführungsbeispiele. Es zeigen:
- Fig. 1: eine schematische Darstellung einer Granuliervorrichtung gemäß einem ersten Ausführungsbeispiel mit einer geöffneten Granulierhaube zur Veranschaulichung eines Messerkopfes mit einer zentrisch zu einer Lochplatte angeordneten Drehachse,
- Fig. 2: eine Draufsicht auf den Messerkopf in Fig. 1,
- Fig. 3: eine Schnittdarstellung durch ein Granuliermesser des Messerkopfes entlang der Schnittlinie III-III in Fig. 2,
- Fig. 4: eine Schnittdarstellung durch das Granuliermesser des Messerkopfes entlang der Schnittlinie IV-IV in Fig. 2, und
- Fig. 5: eine schematische Darstellung einer Granuliervorrichtung gemäß einem zweiten Ausführungsbeispiel mit einer geöffneten Granulierhaube zur Veranschaulichung eines Messerkopfes mit einer exzentrisch zu einer Lochplatte angeordneten Drehachse.

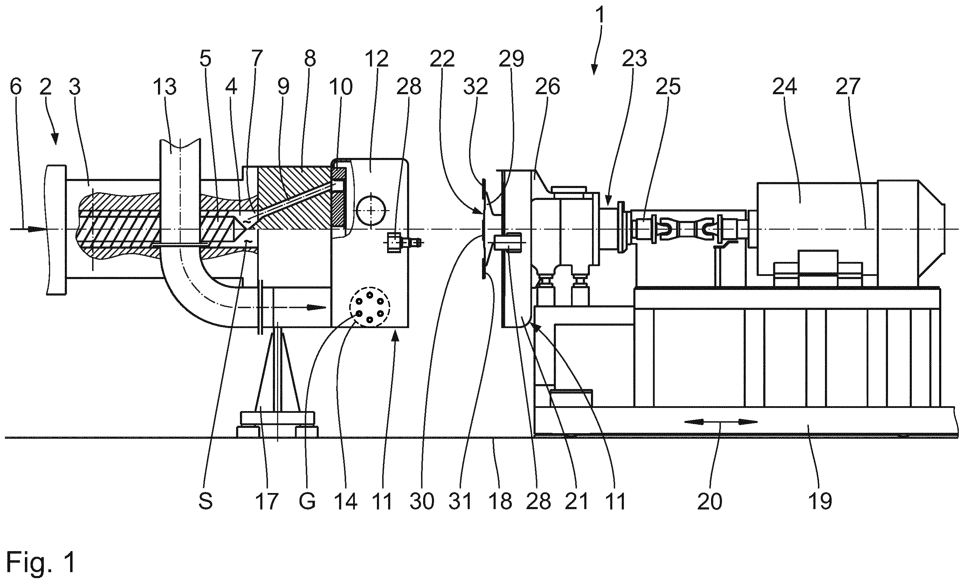

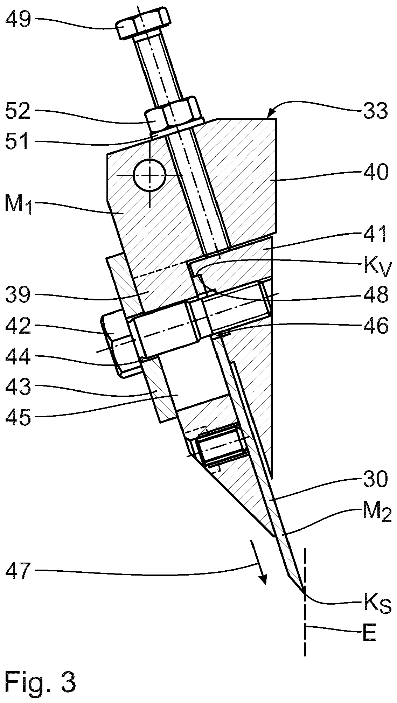

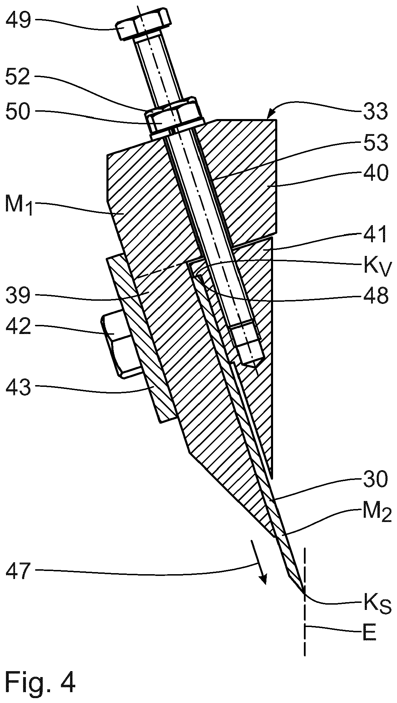

Nachfolgend ist anhand der Fig. 1 bis 4 ein erstes Ausführungsbeispiel der Erfindung beschrieben. Die in Fig. 1 in einem geöffneten Zustand dargestellte Granuliervorrichtung 1 ist einem Extruder 2 nachgeordnet. Der Extruder 2 weist in üblicher Weise ein Gehäuse 3 mit mindestens einer Gehäusebohrung 4 auf, in der eine jeweilige Behandlungselementwelle 5 drehantreibbar angeordnet ist. Der Extruder 2 dient zum Aufschmelzen und Homogenisieren eines zu granulierenden Materials, das als Materialschmelze S in einer Förderrichtung 6 aus einer Austragszone 7 des Extruders 2 austritt. Die Materialschmelze S ist beispielsweise eine Kunststoffschmelze.

Die Granuliervorrichtung 1 ist als Heißgranuliervorrichtung ausgebildet, bei der der Schnitt von Granulat G trocken erfolgt. Die Granuliervorrichtung 1 weist ein Granulierkopfgehäuse 8 auf, das am Ende des Gehäuses 3 befestigt ist. In dem Granulierkopfgehäuse 8 ist mindestens ein Kanal 9 ausgebildet, durch den die aufgeschmolzene und zu granulierende Materialschmelze S einer Lochplatte 10 zugeführt wird, die an einer stromabwärtigen Seite an dem Granulierkopfgehäuse 8 befestigt ist.

An dem Granulierkopfgehäuse 8 ist ein erstes Granulierhaubenteil 12 einer Granulierhaube 11 befestigt. Das erste Granulierhaubenteil 12 umgibt die Lochplatte 10. In das erste Granulierhaubenteil 12 mündet parallel zu der Förderrichtung 6 eine Zuführleitung 13 zur Zuführung von Kühlwasser oder Kühlluft ein. Aus dem ersten Granulierhaubenteil 12 mündet eine Abführleitung 14 quer zu der Förderrichtung 6 aus, sodass stromabwärts der Lochplatte 10 das Kühlwasser bzw. die Kühlluft mit erzeugtem Granulat G aus der Granulierhaube 11 abführbar ist. Das Granulierkopfgehäuse 8, die Lochplatte 10 und das erste Granulierhaubenteil 12 sind ortsfest angeordnet und über eine Stütze 17 auf einem Fundament 18 abgestützt.

Auf einem Grundgestell 19, das in einer Längsrichtung 20 auf dem Fundament 18 verschiebbar angeordnet ist, ist ein zweites Granulierhaubenteil 21, ein Messerkopf 22 und eine Antriebseinrichtung 23 befestigt. Die Antriebseinrichtung 23 umfasst einen elektrischen Antriebsmotor 24, eine Antriebswelle 25 und ein zugehöriges Antriebswellenlager 26. Der Messerkopf 22 ist in einem Innenraum der Granulierhaube 11 angeordnet und der Lochplatte 10 zugewandt. Der Messerkopf 22 ist mit der in dem Antriebswellenlager 26 gelagerten Antriebswelle 25 drehfest verbunden und mittels des Antriebsmotors 24 um eine Drehachse 27 drehantreibbar. Die Drehachse 27 ist konzentrisch zu der Lochplatte 10 angeordnet. Im betriebsfertigen Zustand sind die Granulierhaubenteile 12, 21 durch Verfahren des Grundgestells 19 zusammengefahren, sodass diese dicht gegeneinander anliegen. Mittels einer Verriegelungseinrichtung 28 sind die Granulierhaubenteile 12, 21 in der zusammengefahrenen Stellung miteinander dicht verbunden.

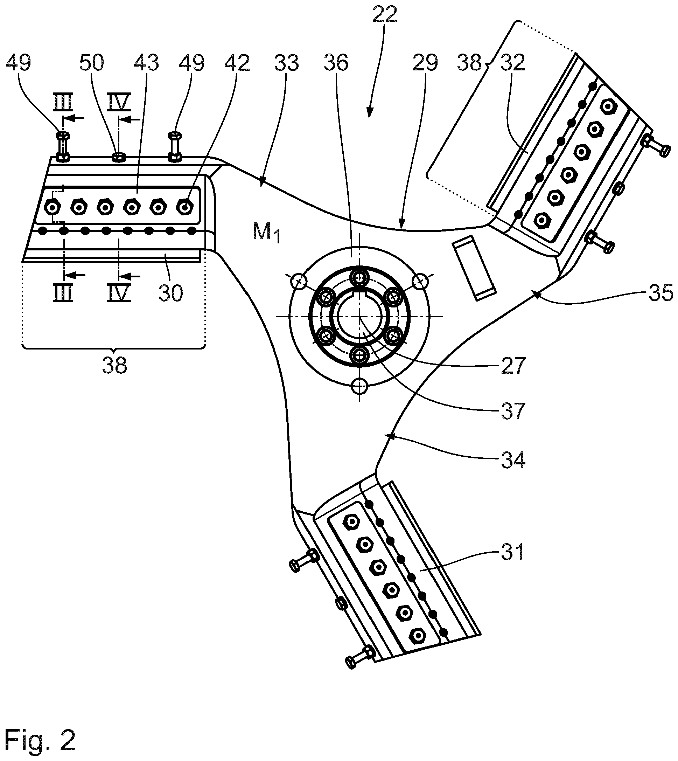

Der Messerkopf 22 dient zur Granulierung von Materialsträngen, die dadurch erzeugt werden, dass die Materialschmelze S mittels des Extruders 2 durch die Lochplatte 10 gefördert wird. Der Messerkopf 22 umfasst einen Messerträger 29, an dem mehrere Granuliermesser 30, 31, 32 befestigt sind. Hierzu weist der Messerträger 29 eine endsprechende Anzahl an Messerarmen 33, 34, 35 auf, die sich ausgehend von einem Lagerabschnitt 36 radial zu der Drehachse 27 erstrecken. In Fig. 2 sind beispielhaft drei Granuliermesser 30, 31, 32 und drei zugehörige Messerarme 33, 34, 35 dargestellt. Die Messerarme 33, 34, 35 sind einteilig mit dem Lagerabschnitt 36 ausgebildet. Die Messerarme 33, 34, 35 sind rotationssymmetrisch um die Drehachse 27 angeordnet. Der Lagerabschnitt 36 ist als Nabe ausgebildet und weist eine Aufnahmebohrung 37 zur Aufnahme und drehfesten Befestigung der Antriebswelle 25 auf. Der Lagerabschnitt 26 ist somit konzentrisch zu der Drehachse 27 angeordnet und drehfest mit der Antriebswelle 25 verbunden. An jedem der Messerarme 33, 34, 35 ist an einem dem Lagerabschnitt 26 abgewandten Ende eines der Granuliermesser 30, 31, 32 befestigt.

Nachfolgend ist anhand des Granuliermessers 30 und des zugehörigen Messerarms 33 die Befestigung des Granuliermessers 30 im Detail beschrieben. Die nachfolgenden Ausführungen gelten entsprechend für die Granuliermesser 31, 32 und die zugehörigen Messerarme 34, 35.

In einem Befestigungsbereich 38 ist der Messerarm 33 im Querschnitt L-förmig ausgebildet und weist einen Auflageabschnitt 39 und einen Verstellabschnitt 40 auf. Das Granuliermesser 30 liegt gegen den Auflageabschnitt 39 an und ist mittels eines Verstellelements 41 gegen den Auflageabschnitt 39 geklemmt und somit befestigt. Das Verstellelement 41 ist beispielsweise keilförmig ausgebildet. Die Befestigung des Granuliermessers 30 erfolgt mittels Passschrauben 42 und einer Abdeckplatte 43. Die jeweilige Passschraube 42 ist durch eine zugehörige Bohrung 44 in der Abdeckplatte 43, eine sich durch den Auflageabschnitt 39 erstreckende Passnut 45 und eine zugehörige Bohrung 46 in dem Granuliermesser 30 geführt und anschließend mit dem Verstellelement 41 verschraubt. Der Auflageabschnitt 39 und die jeweilige Passnut 45 erstrecken sich in einer Verstellrichtung 47, die schräg zu einer Schnittebene E verläuft. Die Schnittebene E ist durch die Schneidkante K_{S} des Granuliermessers 30 definiert, das sich über den Auflageabschnitt 39 hinaus erstreckt.

Das Verstellelement 41 bildet einen Verstellanschlag 48 aus, der sich entlang einer Verstellkante Kv des Granuliermessers 30 erstreckt und gegen diese anliegt. Zum Verstellen des Granuliermessers 30 sind Verstellschrauben 49, 50 vorgesehen. Die Verstellschrauben 49 sind in den Verstellabschnitt 40 eingeschraubt und liegen gegen das Verstellelement 41 an. Die Verstellschrauben 49 dienen zur Verstellung der Schneidkante Ks in der Verstellrichtung 47. Die Verstellschrauben 49 werden mittels eines jeweiligen Federrings 51 und einer zugehörigen Sicherungsmutter 52 gesichert. Die Verstellschraube 50 dient zur Verstellung der Schneidkante Ks entgegen der Verstellrichtung 47. Hierzu ist die Verstellschraube 50 durch eine Bohrung 53 des Verstellabschnitts 40 geführt und mit dem Verstellelement 41 verschraubt. Zum Verstellen sind auf der Verstellschraube 50 eine Verstellmutter 54 und ein Federring 55 angeordnet.

Der Messerträger 29 besteht aus einem Messerträger-Material M₁. Das Messerträger-Material M₁ hat bei 20°C eine Wärmeleitfähigkeit λ₁, einen Wärmeausdehnungskoeffizient α₁ und eine Dichte ρ₁.

Für die Wärmeleitfähigkeit λ₁ gilt: λ₁ ≥ 150 W/m/K, insbesondere λ₁ ≥ 200 W/m/K, und insbesondere λ₁ ≥ 250 W/m/K.

Für den Wärmeausdehnungskoeffizienten α₁ gilt: α₁ ≥ 16 · 10⁻⁶ 1/K, insbesondere α₁ ≥ 18 · 10⁻⁶ 1/K, und insbesondere α₁ ≥ 21 · 10⁻⁶ 1/K.

Für die Dichte ρ₁ gilt: ρ₁ ≤ 7,0 g/cm³, insbesondere ρ₁ ≤ 5,0 g/cm³, und insbesondere ρ₁ ≤ 3,0 g/cm³.

Das Messerträger-Material M₁ umfasst mindestens ein Material aus der Gruppe Aluminium, Kupfer, Magnesium und Beryllium. Vorzugsweise ist das Messerträger-Material M₁ eine Legierung mit mindestens zwei Materialien aus dieser Gruppe. Das Messerträger-Material M₁ ist insbesondere eine Legierung mit mindestens 80 Gew.-% Aluminium, Magnesium oder Kupfer.

Das Messerträger-Material M₁ ist beispielsweise ausgewählt aus:

| Materialbezeichnung | Norm | λ₁ in W/m/K bei 20°C | α₁ in 10⁻⁶ 1/K bei 20°C | ρ₁ in g/cm³ bei 20°C |
|---|---|---|---|---|
| AlCu4MgSi | EN AW 2017 A | 200 | 23,0 | 2,8 |
| CuNi2Be | EN CW 110 C | 260 | 18 | 8,8 |

Je höher die Wärmeleitfähigkeit λ₁ und je höher die Wärmeausdehnungskoeffizient α₁ ist, desto geringer sind die thermischen Verformungen des Messerträgers 29 bzw. der Messerarme 33, 34, 35 und desto höher ist die erzielbare Schnittqualität. Je geringer die Dichte ρ₁ ist, desto mehr verformt bzw. verlagert sich der jeweilige Messerarm 33, 34, 35 unter Einwirkung der Fliehkraft zu der Lochplatte 10 und desto besser ist die Plananlage an der Lochplatte 10.

Die Granuliermesser 30, 31, 32 bestehen aus einem Messer-Material M₂. Das Messer-Material M₂ hat bei 20°C eine Wärmeleitfähigkeit λ₂, einen Wärmeausdehnungskoeffizient α₂ und eine Dichte ρ₂.

Für die Wärmeleitfähigkeit λ₂ gilt: λ₂ ≥ 15 W/m/K, insbesondere λ₂ ≥ 50 W/m/K, und insbesondere λ₂ ≥ 85 W/m/K.

Für den Wärmeausdehnungskoeffizient α₂ gilt: α₂ ≤ 11 · 10⁻⁶ 1/K, insbesondere α₂ ≤ 9,0 · 10⁻⁶ 1/K, und insbesondere α₂ ≤ 7,0 · 10⁻⁶ 1/K.

Für die Dichte ρ₂ gilt: ρ₂ ≥ 3,0 g/cm³, insbesondere ρ₂ ≥ 5,0 g/cm³, und insbesondere ρ₂ ≥ 7,0 g/cm³.

Das Messer-Material M₂ ist beispielsweise ausgewählt aus:

| Materialbezeichnung | Norm | λ₂ in W/m/K bei 20°C | α₂ in 10⁻⁶ 1/K bei 20°C | ρ₂ in g/cm³ bei 20°C |
|---|---|---|---|---|
| CTS24D K40 | DIN ISO 513 | 85 | 5,4 | 14,3 |
| SNCE10 | Bezeichnung von Ceratizit | 60 | 5,5 | 4,2 |
| Ferro- Titanit C-Spezial | Bezeichnung von Thyssen-Krupp | 20,5 | 9,2 | 6,5 |

Die Funktionsweise der Granuliervorrichtung 1 ist wie folgt:
Die Granuliermesser 30, 31, 32 werden mittels der zugehörigen Verstellschrauben 49, 50 derart verstellt, dass deren Schneidkanten Ks in einer gemeinsamen Schnittebene E liegen. Die Granuliermesser 30, 31, 32 werden derart zu der Lochplatte 10 verlagert, dass diese im Betrieb der Granuliervorrichtung 1 mit den Schneidkanten Ks gegen die Lochplatte 10 anliegen. Zur Erzeugung der Materialstränge wird die Materialschmelze S mittels des Extruders 2 durch die Lochplatte 10 gefördert. Zeitgleich wird der Messerkopf 22 mittels der Antriebseinrichtung 23 um die Drehachse 27 drehangetrieben, sodass die Materialstränge mittels der Granuliermesser 30, 31, 32 zu Granulat G geschnitten werden. Die Materialstränge werden trocken geschnitten, also im Heißabschlag. Der Messerkopf 22 wird mit einer Drehzahl n um die Drehachse 27 angetrieben, wobei gilt: n ≥ 1.200 min⁻¹, insbesondere n ≥ 1.400 min⁻¹, und insbesondere n ≥ 1.600 min⁻¹. Die Drehzahl n beträgt vorzugsweise höchstens 2.400 min⁻¹. Das Granulat G wird mittels dem Kühlwasser oder der Kühlluft gekühlt und durch die Abführleitung 14 abtransportiert.

Durch die Kombination des Messerträger-Materials M₁ und des Messer-Materials M₂ werden thermische Verformungen der Messerarme 33, 34, 35 sowie der daran befestigten Granuliermesser 30, 31, 32 reduziert, sodass in einfacher und dauerhafter Weise eine exakte Plananlage der Granuliermesser 30, 31, 32 an der Lochplatte 10 und somit eine hohe Schnittqualität erzielt wird. Durch die vergleichsweise geringe Dichte ρ₁ verlagern bzw. verformen sich die Messerarme 33, 34, 35 unter Einwirkung der Fliehkraft in Richtung der Lochplatte 10, sodass im Betrieb der Granuliervorrichtung 1 bei einer vergleichsweise hohen Drehzahl n die Schnittqualität hoch bleibt. Hierdurch wird eine Bildung von Fähnchen bei der Granulierung vermieden, sodass beispielsweise bei der Granulierung eine PolyvinylchloridSchmelze ein Feinanteil von ca. 0,1 Gew.-% bezogen auf das erzeugte Granulat G erzielbar ist.

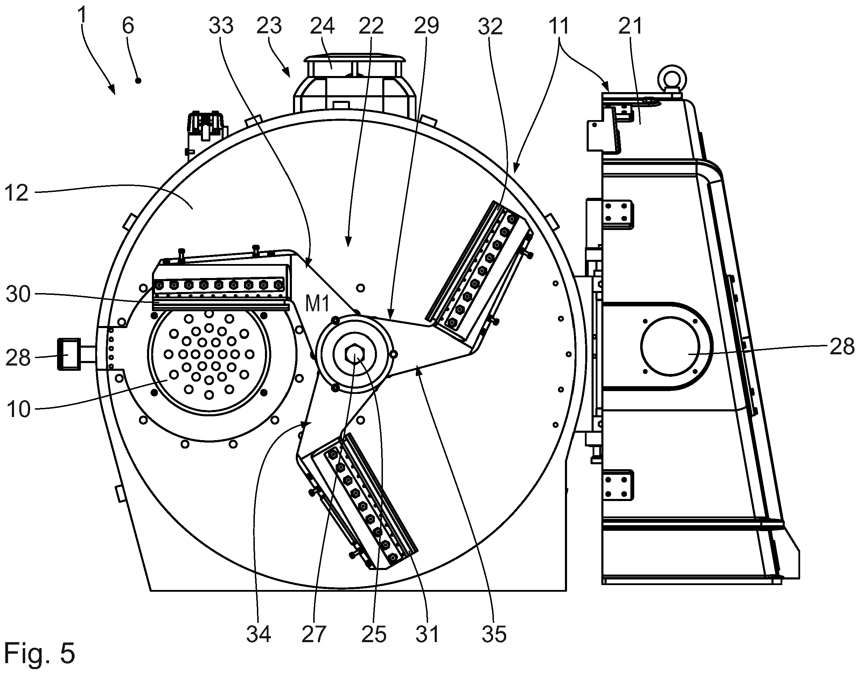

Nachfolgend ist anhand von Fig. 5 ein zweites Ausführungsbeispiel der Erfindung beschrieben. Im Unterschied zu dem ersten Ausführungsbeispiel ist die Drehachse 27 des Messerkopfes 22 exzentrisch zu der Lochplatte 10 angeordnet. Der Messerkopf 22 und die Antriebseinrichtung 23 sind an dem ersten Granulierhaubenteil 12 befestigt. Der Antriebsmotor 24 ist über ein Winkelgetriebe mit der Antriebswelle 25 verbunden. Die Granuliermesser 30, 31, 32 sind derart dimensioniert und angeordnet, dass diese bei einer Rotation des Messerkopfes 22 die Lochplatte 10 vollständig überstreichen. Das zweite Granulierhaubenteil 21 ist mittels eines Scharniers an dem ersten Granulierhaubenteil 12 befestigt und ist mittels der Verriegelungseinrichtung 28 fest mit dem ersten Granulierhaubenteil 12 verschließbar. An einer Unterseite weist das zweite Granulierhaubenteil 21 eine Öffnung auf, sodass das geschnittene Granulat G aus der Granulierhaube 11 fallen und abtransportiert werden kann. Hinsichtlich des weiteren Aufbaus und der weiteren Funktionsweise wird auf das erste Ausführungsbeispiel verwiesen.

## Patentansprüche

1. Granuliervorrichtung zur Granulierung von Materialsträngen umfassend
- eine Lochplatte (10) zur Erzeugung von Materialsträngen,
- einen Messerkopf (22), der zur Erzeugung von Granulat (G) aus den Materialsträngen an einer stromabwärtigen Seite der Lochplatte (10) angeordnet ist, mit
-- einem Messerträger (29) aus einem Messerträger-Material (M₁), und
-- mindestens einem an dem Messerträger (29) befestigten Granuliermesser (30, 31, 32), und
- eine Antriebseinrichtung (23) zum Drehantreiben des Messerkopfes (22) um eine Drehachse (27),
**dadurch gekennzeichnet,**
**dass** der Messerträger (29) mindestens zwei Messerarme (33, 34, 35) zur Befestigung eines jeweiligen Granuliermessers (30, 31, 32) und einen Lagerabschnitt (36) zur drehbaren Lagerung der mindestens zwei Messerarme (33, 34, 35) umfasst,
**dass** das Messerträger-Material (M₁) bei 20 °C eine Wärmeleitfähigkeit λ₁ ≥ 150 W/m/K hat, und
**dass** das Messerträger-Material (M₁) bei 20 °C einen Wärmeausdehnungskoeffizienten α₁ ≥ 16 · 10⁻⁶ 1/K hat.

2. Granuliervorrichtung nach Anspruch 1, **dadurch gekennzeichnet, dass** für die Wärmeleitfähigkeit λ₁ gilt: λ₁ ≥ 200 W/m/K, insbesondere λ₁ ≥ 250 W/m/K.

3. Granuliervorrichtung nach Anspruch 1 oder 2, **dadurch gekennzeichnet, dass** für den Wärmeausdehnungskoeffizienten α₁ gilt: α₁ ≥ 18 · 10⁻⁶ 1/K, insbesondere α₁ ≥ 21 · 10⁻⁶ 1/K.

4. Granuliervorrichtung nach einem der Ansprüche 1 bis 3, **dadurch gekennzeichnet, dass** das Messerträger-Material (M₁) eine Dichte ρ₁ hat, wobei gilt: ρ₁ ≤ 7,0 g/cm³, insbesondere ρ₁ ≤ 5,0 g/cm³, und insbesondere ρ₁ ≤ 3,0 g/cm³.

5. Granuliervorrichtung nach einem der Ansprüche 1 bis 4, **dadurch gekennzeichnet, dass** das Messerträger-Material (M₁) mindestens ein Material aus der Gruppe Aluminium, Kupfer, Magnesium und Beryllium umfasst.

6. Granuliervorrichtung nach einem der Ansprüche 1 bis 5, **dadurch gekennzeichnet, dass** das Messerträger-Material (M₁) eine Legierung mit mindestens 80 Gew.-% Aluminium, Magnesium oder Kupfer ist.

7. Granuliervorrichtung nach einem der Ansprüche 1 bis 6, **dadurch gekennzeichnet, dass** die mindestens zwei Messerarme (33, 34, 35) einteilig mit dem Lagerabschnitt (36) ausgebildet sind.

8. Granuliervorrichtung nach einem der Ansprüche 1 bis 7, **dadurch gekennzeichnet, dass** das jeweilige Granuliermesser (30, 31, 32) aus einem Messer-Material (M₂) hergestellt ist, das bei 20 °C eine Wärmeleitfähigkeit λ₂ hat, wobei gilt: λ₂ ≥ 15 W/m/K, insbesondere λ₂ ≥ 50 W/m/K, und insbesondere λ₂ ≥ 85 W/m/K.

9. Granuliervorrichtung nach einem der Ansprüche 1 bis 8, **dadurch gekennzeichnet, dass** das jeweilige Granuliermesser (30, 31, 32) aus einem Messer-Material (M₂) hergestellt ist, das bei 20 °C einen Wärmeausdehnungskoeffizienten α₂ hat, wobei gilt: α₂ ≤ 11 · 10⁻⁶ 1/K, insbesondere α₂ ≤ 9,0 · 10⁻⁶ 1/K, und insbesondere α₂ ≤ 7,0 · 10⁻⁶ 1/K.

10. Granuliervorrichtung nach einem der Ansprüche 1 bis 9, **dadurch gekennzeichnet, dass** das jeweilige Granuliermesser (30, 31, 32) aus einem Messer-Material (M₂) hergestellt ist, das eine Dichte ρ₂ hat, wobei gilt: ρ₂ ≥ 3,0 g/cm³, insbesondere ρ₂ ≥ 5,0 g/cm³, und insbesondere ρ₂ ≥ 7,0 g/cm³.

11. Verfahren zur Granulierung von Materialsträngen mit den Schritten:
- Bereitstellen einer Granuliervorrichtung (1) nach einem der Ansprüche 1 bis 10,
- Fördern einer Materialschmelze (S) durch die Lochplatte (10) derart, dass Materialstränge erzeugt werden, und
- Drehantreiben des Messerkopfes (22) mittels der Antriebseinrichtung (23) derart, dass die Materialstränge mittels des mindestens einen Granuliermessers (30, 31, 32) zu Granulat (G) geschnitten werden.

## Claims

1. Granulating device for granulating strands of material, comprising:
- a perforated plate (10) for producing strands of material,
- a blade head (22), which is arranged on a downstream side of the perforated plate (10) for the purpose of producing a granulate (G) from the strands of material and has
-- a blade carrier (29) composed of a blade carrier material (M₁) and
-- at least one granulating blade (30, 31, 32) fastened to the blade carrier (29), and
- a drive device (23) for rotationally driving the blade head (22) about an axis of rotation (27),
**characterized**
**in that** the blade carrier (29) comprises at least two blade arms (33, 34, 35) for fastening a respective granulating blade (30, 31, 32), and a mounting portion (36) for rotatably mounting the at least two blade arms (33, 34, 35),
**in that** the blade carrier material (M₁) has a thermal conductivity λ₁ ≥ 150 W/m/K at 20°C, and
**in that** the blade carrier material (M₁) has a coefficient of thermal expansion α₁ ≥ 16 · 10⁻⁶ 1/K at 20°C.

2. Granulating device according to Claim 1, **characterized in that**, for the thermal conductivity λ₁, the following applies: λ₁ ≥ 200 W/m/K, in particular λ₁ ≥ 250 W/m/K.

3. Granulating device according to Claim 1 or 2, **characterized in that**, for the coefficient of thermal expansion α₁, the following applies: α₁ ≥ 18 · 10⁻⁶ 1/K, in particular α₁ ≥ 21 · 10⁻⁶ 1/K.

4. Granulating device according to one of Claims 1 to 3, **characterized in that** the blade carrier material (M₁) has a density ρ₁ where the following applies: ρ₁ ≤ 7.0 g/cm³, in particular ρ₁ ≤ 5.0 g/cm³, and in particular ρ₁ ≤ 3.0 g/cm³.

5. Granulating device according to one of Claims 1 to 4, **characterized in that** the blade carrier material (M₁) comprises at least one material from the group of aluminium, copper, magnesium and beryllium.

6. Granulating device according to one of Claims 1 to 5, **characterized in that** the blade carrier material (M₁) is an alloy with at least 80% by weight of aluminium, magnesium or copper.

7. Granulating device according to one of Claims 1 to 6, **characterized in that** the at least two blade arms (33, 34, 35) are formed as a single part with the mounting portion (36).

8. Granulating device according to one of Claims 1 to 7, **characterized in that** the respective granulating blade (30, 31, 32) is produced from a blade material (M₂) which has a thermal conductivity λ₂ at 20°C where the following applies: λ₂ ≥ 15 W/m/K, in particular λ₂ ≥ 50 W/m/K, and in particular λ₂ ≥ 85 W/m/K.

9. Granulating device according to one of Claims 1 to 8, **characterized in that** the respective granulating blade (30, 31, 32) is produced from a blade material (M₂) which has a coefficient of thermal expansion α₂ at 20°C where the following applies: α₂ ≤ 11 · 10⁻⁶ 1/K, in particular α₂ ≤ 9.0 · 10⁻⁶ 1/K, and in particular α₂ ≤ 7.0 · 10⁻⁶ 1/K.

10. Granulating device according to one of Claims 1 to 9, **characterized in that** the respective granulating blade (30, 31, 32) is produced from a blade material (M₂) which has a density ρ₂ where the following applies: ρ₂ ≥ 3.0 g/cm³, in particular ρ₂ ≥ 5.0 g/cm³, and in particular ρ₂ ≥ 7.0 g/cm³.

11. Method for granulating strands of material, having the following steps:
- providing a granulating device (1) according to one of Claims 1 to 10,
- conveying a material melt (S) through the perforated plate (10) in such a way that strands of material are produced, and
- rotationally driving the blade head (22) by means of the drive device (23) in such a way that the strands of material are cut by means of the at least one granulating blade (30, 31, 32) to form a granulate (G).

## Revendications

1. Dispositif de granulation pour la granulation de boudins de matériau, comprenant
- une plaque perforée (10) pour produire des boudins de matériau,
- une tête porte-lame (22), qui est disposée au niveau d'un côté en aval de la plaque perforée (10) pour produire du granulat (G) à partir des boudins de matériau, avec
- - un support de lame (29) composé d'un matériau de support de lame (M₁), et
- - au moins une lame de granulation (30, 31, 32) fixée au niveau du support de lame (29), et
- un dispositif d'entraînement (23) pour entraîner en rotation la tête porte-lame (22) autour d'un axe de rotation (27),
**caractérisé en ce**
**que** le support de lame (29) comprend au moins deux bras de lame (33, 34, 35) pour fixer une lame de granulation (30, 31, 32) respective et une section de palier (36) pour supporter de manière rotative les au moins deux bras de lame (33, 34, 35),
**que** le matériau de support de lame (M₁) a à 20 °C une conductivité thermoconductrice λ₁ ≥ 150 W/m/K, et
**que** le matériau de support de lame (M₁) a à 20 °C un coefficient de dilatation thermique α₁ ≥ 16 · 10⁻⁶ 1/K.

2. Dispositif de granulation selon la revendication 1, **caractérisé en ce que** s'applique pour la conductivité thermique λ₁ : λ₁ ≥ 200 W/m/K, en particulier λ₁ ≥ 250 W/m/K.

3. Dispositif de granulation selon la revendication 1 ou 2, **caractérisé en ce que** s'applique pour le coefficient de dilatation thermique α₁ : α₁ ≥ 18 • 10⁻⁶ 1/K, en particulier α₁ ≥ 21 • 10⁻⁶ 1/K.

4. Dispositif de granulation selon l'une quelconque des revendications 1 à 3, **caractérisé en ce que** le matériau de support de lame (M₁) a une densité ρ₁, dans lequel s'applique : ρ₁ ≤ 7,0 g/cm³, en particulier ρ₁ ≤ 5,0 g/cm³, et en particulier ρ₁ ≤ 3,0 g/cm³.

5. Dispositif de granulation selon l'une quelconque des revendications 1 à 4, **caractérisé en ce que** le matériau de support de lame (M₁) comprend au moins un matériau issu du groupe de l'aluminium, du cuivre, du magnésium et du béryllium.

6. Dispositif de granulation selon l'une quelconque des revendications 1 à 5, **caractérisé en ce que** le matériau de support de lame (M₁) est un alliage avec au moins 80 % en poids d'aluminium, de magnésium ou de cuivre.

7. Dispositif de granulation selon l'une quelconque des revendications 1 à 6, **caractérisé en ce que** les au moins deux bras de lame (33, 34, 35) sont réalisés en une partie avec la section de palier (36).

8. Dispositif de granulation selon l'une quelconque des revendications 1 à 7, **caractérisé en ce que** la lame de granulation (30, 31, 32) respective est fabriquée à partir d'un matériau de lame (M₂), qui a à 20 °C une conductivité thermique λ₂, dans lequel s'applique : λ₂ ≥ 15 W/m/K, en particulier λ₂ ≥ 50 W/m/K, et en particulier λ₂ ≥ 85 W/m/K.

9. Dispositif de granulation selon l'une quelconque des revendications 1 à 8, **caractérisé en ce que** la lame de granulation (30, 31, 32) respective est fabriquée à partir d'un matériau de lame (M₂), qui a à 20 °C un coefficient de dilatation thermique α₂, dans lequel s'applique : α₂ ≤ 11 • 10⁻⁶ 1/K, en particulier α₂ ≤ 9,0 • 10⁻⁶ 1/K, et en particulier α₂ ≤ 7,0 • 10⁻⁶ 1/K.

10. Dispositif de granulation selon l'une quelconque des revendications 1 à 9, **caractérisé en ce que** la lame de granulation (30, 31, 32) respective est fabriquée à partir d'un matériau de lame (M₂), qui a une densité ρ₂, dans lequel s'applique : ρ₂ ≥ 3,0 g/cm³, en particulier ρ₂ ≥ 5,0 g/cm³, et en particulier ρ₂ ≥ 7,0 g/cm³.

11. Procédé de granulation de boudins de matériau avec les étapes :
- de fourniture d'un dispositif de granulation (1) selon l'une quelconque des revendications 1 à 10,
- de transport d'une matière fondue de matériau (S) à travers la plaque perforée (10) de telle manière que sont produits des boudins de matériau, et
- d'entraînement en rotation de la tête porte-lame (22) au moyen du dispositif d'entraînement (23) de telle manière que les boudins de matériau sont découpés en granulat (G) au moyen de l'au moins une lame de granulation (30, 31, 32).
